# EUROPÄISCHE PATENTSCHRIFT

(11) **EP 1 836 735 B1**
(45) Veröffentlichungstag und Bekanntmachung des Hinweises auf die Patenterteilung: **20.10.2010**
(21) Anmeldenummer: 06700009.1
(22) Anmeldetag: 04.01.2006
(51) Int. Cl.: H01L 31/048

(54) **Anschlussdose für ein Solarpaneel**
Connection box for a solar panel
Boîte de raccordement pour un panneau solaire

(30) Priorität: 14.01.2005 CH 56052005
(43) Veröffentlichungstag der Anmeldung: 26.09.2007
(73) Patentinhaber: Multi-Holding AG, 4123 Allschwil (CH)
(72) Erfinder: ZIMMERMANN, Annick, F-68740 Fessenheim (FR); KOHLER, Markus, CH-4242 Laufen (CH)
(74) Vertreter: Bremi, Tobias Hans
(86) Internationale Anmeldenummer: PCT/CH2006/000005
(87) Internationale Veröffentlichungsnummer: WO 2006/074561

(56) Entgegenhaltungen:
- DE-U1- 20 311 183
- DE-U1- 20 311 184
- US-A- 4 460 232
- US-A- 5 513 075
- PATENT ABSTRACTS OF JAPAN Bd. 2003, Nr. 12, 5. Dezember 2003 (2003-12-05) -& JP 2004 134717 A (SUMISHO METALEX CORP; CYBOX CO LTD), 30. April 2004 (2004-04-30)

## Beschreibung

### TECHNISCHES GEBIET

Die vorliegende Erfindung bezieht sich auf das Gebiet der photovoltaischen Solartechnik. Sie betrifft eine Anschlussdose für ein Solarpaneel gemäss dem Oberbegriff des Anspruchs 1 sowie ein Solarpaneel mit einer solchen Anschlussdose.

Eine Anschlussdose der genannten Art ist z.B. aus der Druckschrift DE-U1-203 11 184 bekannt.

### STAND DER TECHNIK

Zur Erzeugung von elektrischem Strom aus Sonnenlicht werden zunehmend photovoltaische Solarpaneele eingesetzt, die das Sonnenlicht direkt in elektrische

Energie umwandeln. Derartige Paneele haben Flächen im m²-Bereich und bestehen aus einer Vielzahl von meist mono- oder polykristallinen Solarzellen, die nebeneinanderliegend zwischen einer gemeinsamen vorderen Abdeckschicht und einer gemeinsamen rückseitigen Abdeckschicht angeordnet und miteinander verschaltet sind. Um höhere Spannungen zu erreichen, werden meist mehrere Solarpaneele in Serie geschaltet. Jedem Solarpaneel wird dabei wenigstens eine Bypassdiode zugeordnet, die den Strom durch die Serieschaltung sicherstellt, falls das zugehörige Solarpaneel nicht ausreichend mit Sonnenlicht versorgt wird (siehe z.B. die US-A1-200310193322). Zur Verschaltung mehrerer Solarpaneele ist jedem Solarpaneel eine Anschlussdose zugeordnet, die am Solarpaneel befestigt ist. Die von den Solarzellen des Paneels kommenden Anschlussleitungen werden in der Anschlussdose auf entsprechende Anschlusselemente gelegt, auf die dann von aussen mittels Steckverbindern oder externen Kabeln zugegriffen werden kann. Des weiteren nimmt die Anschlussdose die Bypassdioden auf.

Die Bypassdioden können als in einem Gehäuse verkapselte Bauelemente ausgebildet sein (siehe z.B. die EP-A1-0 999 601). Sie können aber auch als gehäuselose Bauelemente in die Schaltung der Anschlussbox integriert sein (US-B2-6,655,987 oder US-A1-2002/0117200). Die Bypassdioden mit Gehäuse können dabei in der Anschlussdose eingegossen sein (EP-A1-0 999 601). Sie können aber auch auf einer Leiterplatte montiert (DE-U1-203 11 184) oder in geeignete Kontaktelemente eingesteckt sein (DE-U1-203 11 183).

Wenn derartige Bypassdioden im Falle einer Abschattung des zugehörigen Paneels die Stromführung übernehmen, kann es zu einer erheblichen Verlustleistung kommen, deren Wärme aus den Bypassdioden durch geeignete Massnahmen abgeführt werden muss. Dies kann einerseits durch direkte Konvektion geschehen. Dabei wird die anfallende Wärme direkt durch Konvektion ab dem Diodenkörper in die umgebende Luft abgegeben. In einem geschlossenen Raum, wie ihn die Anschlussdose darstellt, muss die Wärme anschliessend durch die Wände der Dose in die Atmosphäre abgegeben werden. Dies bedingt, bei großem Energieanfall, auch genügend groß dimensionierte Wandflächen und damit ein entsprechend grosses Dosengehäuse.

Die Dioden können aber auch mit einem Kühlkörper ausgerüstet werden. Oder es können zur besseren Wärmeabführung zwei Dioden parallel geschalten werden. Um grosse Wärmemengen abführen zu können, braucht es dann grosszügig dimensionierte Kühlkörper. In abgeschlossenen Räumen wie den Anschlussdosen hat diese Lösung jedoch einen schlechten Wirkungsgrad.

In der US-B2-6,828,503 wird beispielsweise vorgeschlagen, im Inneren der Anschlussdose zwischen den Anschlüssen zusätzliche Flächen zur Abstrahlung der von den Bypassdioden abgegebenen Verlustwärme vorzusehen. Eine verbesserte Abgabe der Wärme an die Umgebung der Anschlussdose wird damit nicht erreicht.

In der US-A1-200310193322 wird unter anderem vorgeschlagen (Fig. 9, 10), auf dem Boden der Anschlussbox eine Metallplatte aufzukleben oder einzuschnappen, um die Wärmeabfuhr von den Bypassdioden zu verbessern. Eine direkte thermische Verbindung zu den Bypassdioden wird dadurch jedoch nicht erreicht. In der gleichen Druckschrift wird auch vorgeschlagen (Fig. 6-8), klammerförmige Anschlussteile durch den Boden der Anschlussbox nach aussen zu führen, um Wärme von den Bypassdioden nach aussen zu bringen. Diese Anschlussteile sind jedoch aufwändig in Herstellung und Montage und bieten nur geringe Wärmeübergangsflächen.

Aus der DE-C1-100 50 614 ist es schliesslich bekannt, die Anschlussdose insgesamt aus Metall herzustellen, die Bypassdioden thermisch an die Innenseiten der Gehäusewand anzukoppeln, und die Aussenseite der Gehäusewand zusätzlich mit Kühlrippen zu versehen. Nachteilig ist hierbei neben der aufwändige Fertigung für die Anschlussdose selbst eine freie Verdrahtung der Dioden, die keine isolierte Montage zusätzlicher Anschlussteile erlaubt und nicht automatisiert werden kann und daher für eine kostengünstige Massenfertigung nicht geeignet ist.

DE 203 11 183-U offenbart eine Anschlussdose für ein Solarpaneel, wobei Kontaktelemente einen sich verjüngenden Aufnahmebereich aufweisen, so dass eine automatische Montage eines Kontaktes möglich ist. Ferner umfasst die Anschlussdose eine Leiterplatte, auf welcher die Kontaktelemente angeordnet sind.

JP 2004-134717 zeigt eine weitere Anschlussdose. Die Anschlussdose weist eine grosse Öffnung auf, welche Zugang zum Innenraum der Anschlussdose bereitstellt. Die Anschlussdose wird dabei derart auf der Solarpaneele angeordnet, dass die Öffnung gegen die Oberfläche der Solarpaneele gerichtet ist. Im Bereich der Öffnung ist zudem eine Leiterplatte angeordnet, welche zur Aufnahme und Verschaltung von mehreren elektrischen Komponenten dient.

Aus der US 5,513,075 ist ein Modul zur elektrischen Verbindung von Leiterdrähten zu Schaltkreisen von Solarpaneelen, und aus der US 4,460,232 ein Aluminiumdeckel, bekannt.

Aus den genannten Druckschriften resultiert ein Nachteil, dass die Wärme nicht effizient aus dem Gehäuse abgeleitet werden kann.

### DARSTELLUNG DER ERFINDUNG

Es ist Aufgabe der Erfindung, eine Anschlussdose für ein Solarpaneel zu schaffen, welche die Nachteite bekannter Anschlussdosen hinsichtlich der Wärmeabfuhr aus den darin angeordneten Bypassdioden vermeidet und sich insbesondere durch einfachen Aufbau, leichte Montage, flexible Ausgestaltung und gute thermische Eigenschaften auszeichnet, sowie ein Solarpaneel mit einer solchen Anschlussdose anzugeben.

Die Aufgabe wird durch die Gesamtheit der Merkmale der Ansprüche 1 und 14 gelöst. Der Kern der Erfindung besteht darin, die Dioden auf einer Leiterplatte anzuordnen, die einen Teil der Aussenwand des Gehäuses bildet. Dies hat den Vorteil, dass die Rückseite der Leiterplatte gleichzeitig eine Aussenfläche der Anschlussdose bildet und so direkt, grossflächig und mit kurzem Weg zur Abgabe der in den Dioden erzeugten Verlustwärme an die Umgebung eingesetzt werden kann. Gleichzeitig kann die Leiterplatte für die elektrische Verschaltung innerhalb der Anschlussdose verwendet werden, so dass die Anschlussdose selbst sehr einfach und kostengünstig ausgeführt werden kann.

Eine bevorzugte Ausgestaltung der Erfindung ist **dadurch gekennzeichnet, dass** das Gehäuse auf der Oberseite durch einen Deckel verschliessbar ist, dass das Gehäuse auf der dem Deckel gegenüberliegenden Seite einen Gehäuseboden aufweist, und dass die Leiterplatte einen Teil des Gehäusebodens bildet. Hierdurch wird es möglich, die Anschlussdose so auf einer Fläche des Solarpaneels anzubringen, dass die Leiterplatte mit der gesamten Unterseite grossflächig thermisch an eine Fläche, z.B. die Rückseite des Solarpaneels, angekoppelt wird. Die anfallende Wärme kann so auf grössere Flächen verteilt und sehr viel besser abgeführt werden.

Vorzugsweise ist die Leiterplatte lösbar mit dem Gehäuse verbunden und insbesondere mittels einer Schnappverbindung am Gehäuse befestigt. Die Leiterplatte kann so unabhängig vom Gehäuse konfektioniert und bestückt werden und lässt sich anschliessend einfach und schnell mit dem Gehäuse verbinden.

Eine bevorzugte Weiterbildung der Schnappverbindung ist **dadurch gekennzeichnet, dass** die Schnappverbindung Druckfedern umfasst, derart, dass die eingeschnappte Leiterplatte über den Gehäuseboden ganzflächig hinaussteht und gegen den Federdruck der Druckfedern soweit in das Gehäuse eindrückbar ist, dass sie mit dem Gehäuseboden im wesentlichen bündig abschliesst. Hierdurch wird die Leiterplatte bei der Montage der Anschlussdose an einem Solarpaneel gegen die Montagefläche gepresst und ein enger thermischer Kontakt zur Montagefläche hergestellt und dauerhaft aufrechterhalten.

Besonders einfach und funktionssicher ist der Aufbau, wenn die ersten und zweiten Anschlussmittel zusammen mit den Dioden auf der Leiterplatte angeordnet sind, und die Dioden thermisch eng an die Leiterplatte angekoppelt sind. Die enge thermische Ankopplung der Dioden kann dabei durch flächiges Auflöten oder auch Aufkleben der Dioden auf die Leiterplatte erreicht werden.

Eine weitere Verbesserung der Wärmeableitung lässt sich dadurch erzielen, dass die Leiterplatte eine thermisch gut leitende, vorzugsweise metallische Trägerplatte, insbesondere aus Aluminium, umfasst, welche beim Einsetzen der Leiterplatte in das Gehäuse die Aussenseite des Gehäusebodens bildet. Durch die thermisch gut leitende Trägerplatte wird eine laterale Verteilung der lokal in den Dioden entstehenden Wärme auf die ganze Fläche der Leiterplatte gefördert. Gleichzeitig steigt auch die Wärmeleitfähigkeit senkrecht zur Plattenebene. Ist die Trägerplatte aus Metall, erhöht sie zugleich die mechanische Stabilität der Leiterplatte und der Anschlussdose insgesamt.

Besonders bewährt hat sich bei der Leiterplatte ein Schichtaufbau aus der Trägerplatte, einer darüber liegenden Isolierschicht und einer über der Isolierschicht liegenden Leitungsschicht, wobei bevorzugt die Trägerplatte eine Dicke von etwa 1,5 mm aufweist, die Isolierschicht aus beispielsweise auch Glasfasern enthaltendem Polyester besteht und eine Dicke von etwa 150 µm aufweist, und die Leitungsschicht aus Cu besteht und eine Dicke von etwa 35 µm aufweist.

Eine alternative Ausgestaltung der Leiterplatte ist **dadurch gekennzeichnet, dass** die Leiterplatte aus beidseitig metallisch, insbesondere mit Cu/Sn beschichtetem Isoliermaterial besteht, und dass Mittel zur verstärkten thermischen Kopplung der beiden metallischen Beschichtungen vorgesehen sind. Hierdurch ist es möglich, standardisiertes Printplattenmaterial wie z.B. FR4 (mit glasfaserverstärktem Epoxidharz als Isoliermaterial) zu verwenden, wodurch die Verarbeitung vereinfacht und Kosten gesenkt werden.

Als thermische Kopplungsmittel kommt insbesondere eine Vielzahl von über die Leiterplatte verteilt angeordneten Durchkontaktierungslöchern in Frage, die eine metallische Verbindung zwischen beiden metallischen Beschichtungen herstellen und mittels bewährter Techniken hergestellt werden können.

Die Verschaltung innerhalb der Anschlussdose wird dadurch vereinfacht, dass die Dioden und die ersten und zweiten Anschlussmittel über in der Leitungsschicht bzw. den metallischen Beschichtungen ausgebildete Leiterbahnen miteinander elektrisch verbunden sind.

Die ersten Anschlussmittel sind vorzugsweise als auf der Leiterplatte befestigte, von der Leiterplatte abstehende Anschlussfahnen ausgebildet. In der Nähe der Anschlussfahnen ist im Gehäuse eine Öffnung zur Durchführung von Anschlussleitungen des Solarpaneels vorgesehen.

Anstelle der Anschlussfahnen können die ersten Anschlussmittel als auf der Leiterplatte angeordnete Lötpunkte ausgebildet sein. Auch in diesem Fall ist in der Nähe der Lötpunkte im Gehäuse eine Öffnung zur Durchführung von Anschlussleitungen des Solarpaneels vorgesehen. Die Lötpunkte sind kostengünstiger und lötfreundlicher und ermöglichen eine direkte und stabile Verbindung.

Am Gehäuse sind vorzugsweise von innen zugängliche Anschlüsse zum Verbinden der Anschlussdose mit anderen Solarpaneelen angeordnet, und die zweiten Anschlussmittel sind zur Herstellung einer elektrischen Verbindung mit den Anschlüssen ausgebildet sind. Die zweiten Anschlussmittel umfassen insbesondere jeweils ein flexibles Leiterband, welches mit dem einen Ende an der Leiterplatte befestigt ist, und am anderen Ende eine Klemme zur lösbaren Verbindung mit einem der Anschlüsse aufweist. Die Anschlüsse sind dabei bevorzugt als Steckanschlüsse ausgebildet.

Eine bevorzugte Ausgestaltung des Solarpaneels nach der Erfindung zeichnet sich dadurch aus, dass die Anschlussdose mit der Leiterplatte auf das Solarpaneel geklebt ist, wobei das Solarpaneel Solarzellen umfasst, die zwischen einer vorderen Abdeckschicht und einer rückseitigen Abdeckschicht angeordnet sind, und wobei die Anschlussdose mit der Leiterplatte auf der rückseitigen Abdeckschicht befestigt bzw. auf die rückseitige Abdeckschicht geklebt ist.

Eine Alternative ist **dadurch gekennzeichnet, dass** die Leiterplatte mechanisch, insbesondere mit Federdruck, gegen das Solarpaneel gepresst wird.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer perspektivischen Darstellung eine fertig montierte Anschlussbox mit geöffnetem Deckel gemäss einem bevorzugten Ausführungsbeispiel der Erfindung;
- Fig. 2: die Anschlussbox aus Fig. 1 in geschlossenem Zustand;
- Fig. 3: in einer zu Fig. 1 vergleichbaren Darstellung die Anschlussbox aus Fig. 1 mit abgetrennter Leiterplatte;
- Fig. 4: in einer Schnittdarstellung den bevorzugten Schichtaufbau der Leiterplatte aus Fig. 3;
- Fig. 5: im Schnitt die auf ein Solarpaneel geklebte Anschlussbox aus Fig. 1;
- Fig. 6: das Einschnappen der Leiterplatte in die Anschlussbox aus Fig. 1;
- Fig. 7: die Befestigung der fertigen Anschlussbox mit eingeschnappter Leiterplatte am Solarpaneel;
- Fig. 8: in einer zu Fig. 3 vergleichbaren Darstellung eine Anschlussbox gemäss einem anderen bevorzugten Ausführungsbeispiel der Erfindung;
- Fig. 9: das Einschnappen der Leiterplatte in die Anschlussbox aus Fig. 8; und
- Fig. 10: die Befestigung der fertigen Anschlussbox mit eingeschnappter Leiterplatte gemäss Fig. 9 am Solarpaneel.

### WEGE ZUR AUSFÜHRUNG DER ERFINDUNG

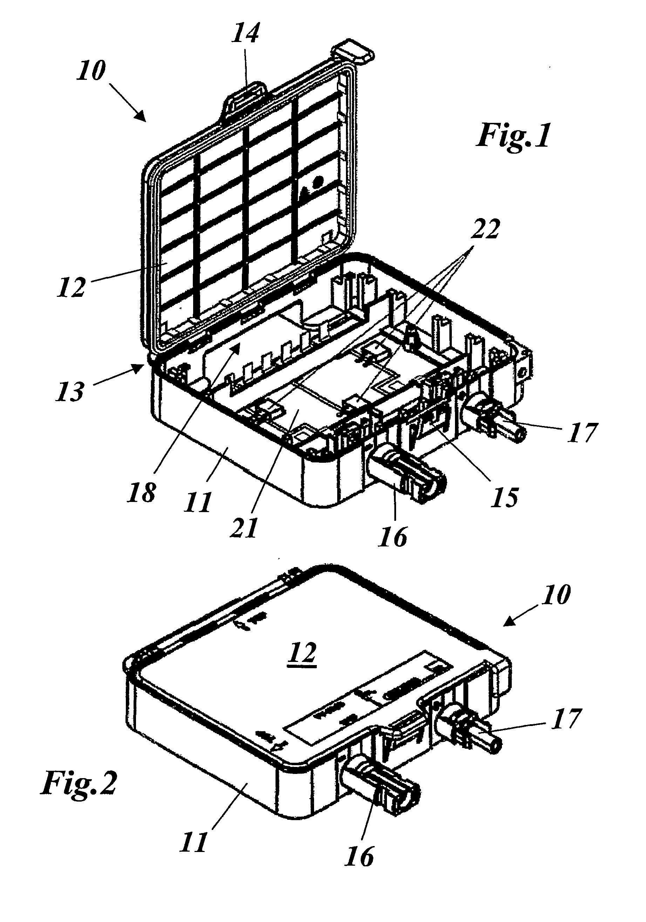

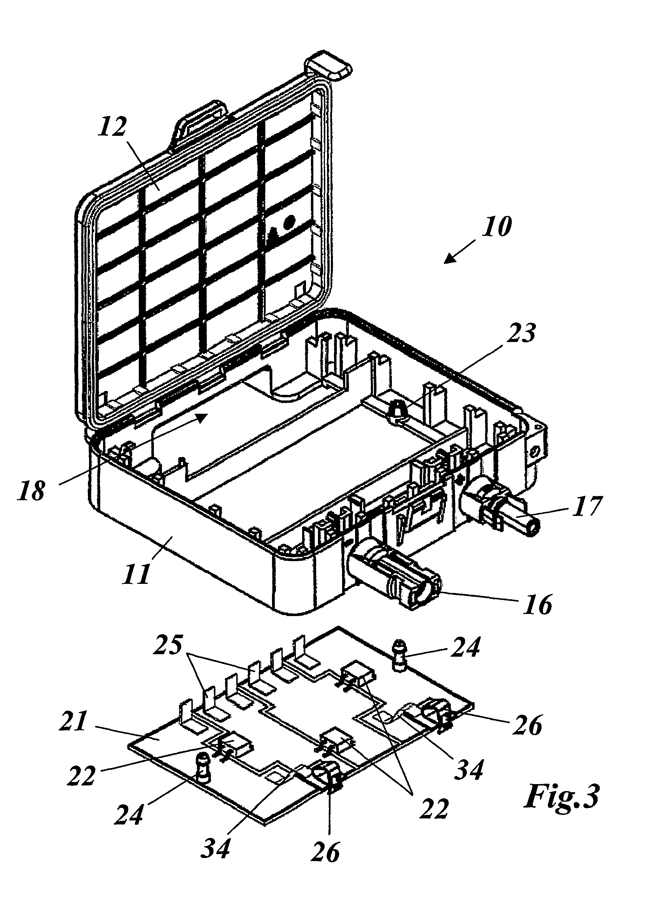

In Fig. 1 und 2 ist ein bevorzugtes Ausführungsbeispiel einer Anschlussdose für ein Solarpaneel nach der Erfindung im geschlossenen und geöffneten Zustand in einer perspektivischen Ansicht wiedergegeben. Fig. 3 zeigt dieselbe Anschlussdose, jedoch mit herausgenommener und getrennt dargestellter Leiterplatte. Die Anschlussdose 10 hat ein aus einem Kunststoff bestehendes Gehäuse 11, das im wesentlichen rechteckig ausgebildet ist und eine umlaufende Seitenwand umfasst. Das Gehäuse 11 ist nach oben und unten offen. Oben kann es durch einen Deckel 12 verschlossen werden, der an der hinteren Seitenwand mit einem Scharnier 13 schwenkbar befestigt ist. Der obere umlaufende Rand der Seitenwand und der entsprechende Rand des Deckels 12 können mit Dichtungsmitteln ausgestattet sein, um eine ausreichende Abdichtung der Anschlussdose 10 unter verschiedenen Wetterbedingungen zu erreichen. Zum mechanischen Sichern des geschlossenen Deckels 12 dient ein Schnappverschluss mit einem am vorderen Deckelrand angeformten Verschlussbügel 14, in den beim Schliessen des Deckels 12 eine am Gehäuse 11 angeformte, federnde Rastzunge 15 einrastend einfährt.

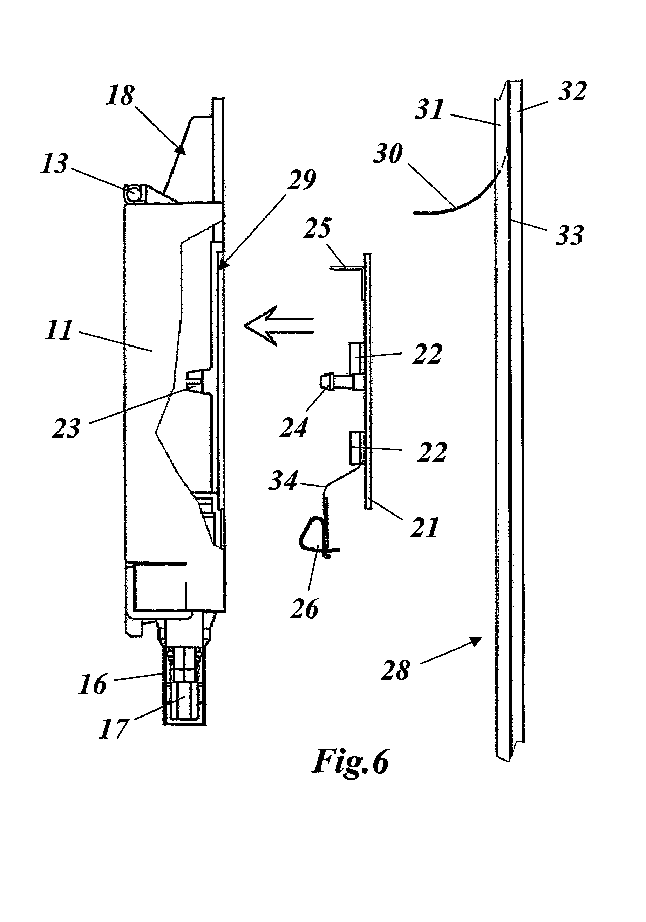

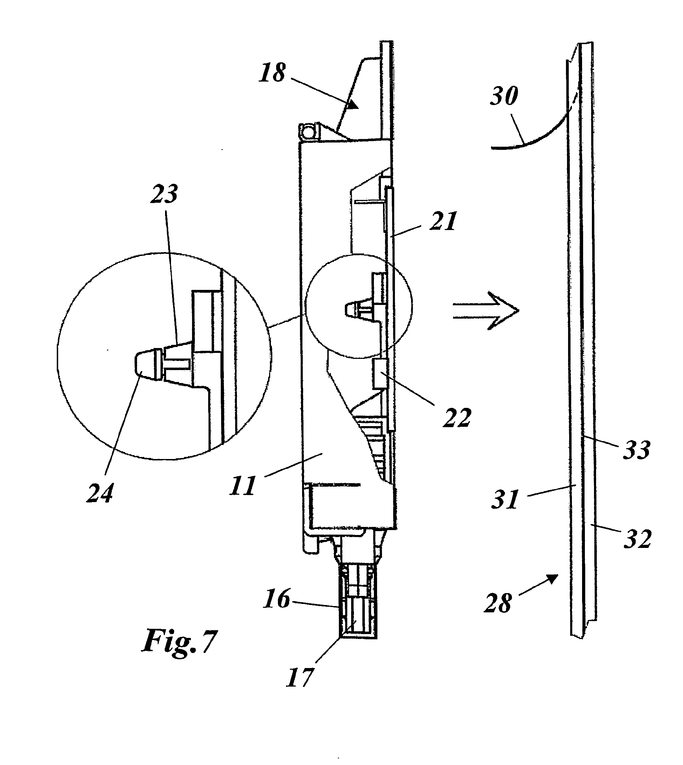

Der Boden der nach der Herstellung zunächst unten offenen Anschlussdose (siehe Fig. 3) wird weitgehend durch eine Leiterplatte 21 gebildet, die mit dem Gehäuse 11 lösbar verbunden ist. Die in Fig. 3 separat dargestellte, rechteckige Leiterplatte 21 ist an den Querseiten mit ersten, pfostenartigen Schnappelementen 24 ausgestattet, die beim Befestigen (Einschnappen) der Leiterplatte 21 am Gehäuse 11 in entsprechende zweite Schnappelemente 23, die am Gehäuse 11 befestigt sind, einfahren und dort einrasten. Die ersten Schnappelemente 24 haben zu diesem Zweck an ihren freien Ende eine Verdickung, die beim Einführen in die zweiten Schnappelemente 23 die dort ausgebildeten Federzungen zunächst elastisch auseinander drückt und nach dem vollständigen Einführen hinter der Verdickung wieder einrastend zurückschnellen lässt (siehe Fig. 6 und den vergrösserten Ausschnitt in Fig. 7). Die ersten Schnappelemente 24 können beispielsweise aus Metall bestehen und auf der Leiterplatte 21 befestigt sein. Die Leiterplatte 21 dient der elektrischen Verschaltung der Anschlussdose 10. Sie trägt dazu an der einen Längsseite nebeneinander angeordnet mehrere senkrecht zur Plattenebene abgebogene Anschlussfahnen 25, an welche die aus dem Solarpaneel (28 in Fig. 6, 7) herausgeführten Flachbandanschlüsse (30 in Fig. 6, 7) angeschlossen werden. Die Anschlussfahnen 25 sind beispielsweise auf die Leiterplatte aufgelötet. Um bei eingeschnappter Leiterplatte 21 die Flachbandanschlüsse 30 in die Anschlussdose 10 einführen zu können, ist neben der Leiterplatte 21 im Boden eine Öffnung 18 freigelassen. An der gegenüberliegenden Längsseite der Leiterplatte 21 sind über Leiterbänder 34 zwei Klemmen 26 angeschlossen, die der lösbaren elektrischen Verbindung der Leiterplatte 21 mit in der Gehäusewand angeordneten Steckanschlüssen 16, 17 dienen. Die flexiblen Leiterbänder 34, die vorzugsweise aus Cu sind, ermöglichen einen ausgangsseitigen Anschluss der Leiterplatte 21 an die Steckanschlüsse 16, 17, nach dem die Leiterplatte 21 in das Gehäuse 11 eingeschnappt worden ist (siehe Fig. 6 und 7).

Auf der Leiterplatte 21 sind weiterhin mehrere Dioden 22 angeordnet, die als Bypass- bzw. Schutzdioden vorgesehen sind und das zur Anschlussdose 10 gehörende Solarpaneel 28 überbrücken, wenn es ganz oder teilweise abgeschattet ist. Die Dioden 22 sind jeweils in einem flachen Leistungsgehäuse untergebracht und liegend durch Löten oder Kleben auf der Oberseite der Leiterplatte 21 befestigt, so dass ein grossflächiger thermischer Kontakt zur Leiterplatte 21 besteht.

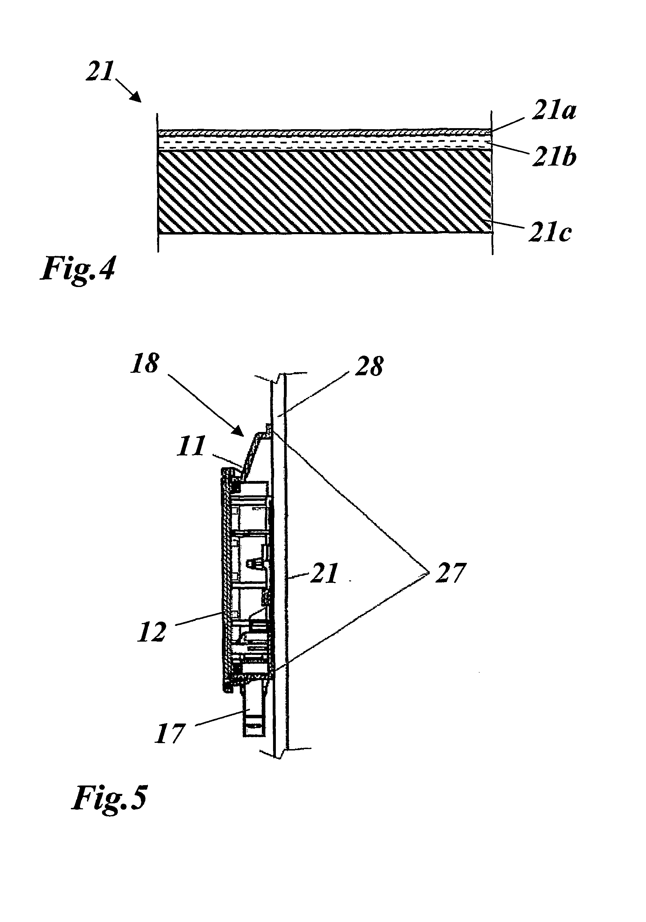

Die Leiterplatte 21 hat vorzugsweise den in Fig. 4 dargestellten Schichtaufbau. Dieser Schichtaufbau umfasst eine Trägerplatte 21 c, eine darüber liegende Isolierschicht 21 b und eine über der Isolierschicht 21 b liegenden Leitungsschicht 21 a. Die Leitungsschicht 21 a ist unter Ausbildung einzelner Leitungsbereiche oder Leiterbahnen so strukturiert, dass die Anschlussfahnen 25 elektrisch mit den Klemmen 26 verbunden sind und die Dioden 22 in geeigneter Weise angeschlossen sind. Die Trägerplatte 21 c besteht vorzugsweise aus Aluminium und weist eine Dicke von etwa 1,5 mm auf. Die Isolierschicht 21 b besteht beispielsweise aus Glasfasern enthaltendem Polyester und hat eine Dicke von etwa 150 µm. Die Leitungsschicht 21 a besteht in üblicher Weise aus Cu und hat im Beispiel eine Dicke von etwa 35 µm. Es versteht sich von selbst, dass im Rahmen der Erfindung von diesen Abmessungen auch abgewichen werden kann, und dass auch andere geeignete Materialien für die einzelnen Schichten der Leiterplatte 21 Verwendung finden können. So ist es denkbar, auf die Trägerplatte auf physikalischem oder chemischem Wege, z.B. durch Aufsprühen oder Abscheiden, eine Isolierschicht aus einem anderen Material aufzubringen.

Die Dioden 22 sind auf der Leiterplatte 21 zwischen den beiden Längsseiten in einem Mittelbereich angeordnet. Zum Anschluss der Leiterplatte 21 an die Steckanschlüsse 16, 17 werden die Leiterbänder 34 nach vorne geführt und mittels der Klemmen 26 mit den Steckanschlüssen 16, 17 verbunden.

Die Montage der Anschlussdose 10 und ihre Befestigung an dem zugehörigen Solarpaneel 28 ist in den Fig. 5, 6 und 7 wiedergegeben. Das Solarpaneel 28 umfasst eine Vielzahl von zusammengeschalteten einzelnen Solarzellen 33, die zwischen einer vorderen (durchsichtigen) Abdeckschicht 32 und einer rückseitigen Abdeckschicht 31 eingebettet sind. Die vordere Abdeckschicht 32 besteht üblicherweise aus Glas. Die rückseitige Abdeckschicht 31 kann ebenfalls aus Glas oder aus einer Polyvinylfluoridfolie bestehen, wie sie beispielsweise unter dem Markennamen Tedlar^{®} im Handel erhältlich ist.

Nach Fertigstellung der mit den Anschlussfahnen 25, den Dioden 22, den Schnappelementen 24 und den Leiterbändern 34 bestückten Leiterplatte 21 wird die Leiterplatte 21 gemäss Fig. 6 in Pfeilrichtung von unten in das Gehäuse 11 der Anschlussdose 10 eingeschnappt. Im Bodenbereich des Gehäuses 11 ist eine Ausnehmung 29 zur Aufnahme der Leiterplatte 21 vorgesehen, deren Tiefe der Dicke der Leiterplatte 21 entspricht, so dass nach dem Einschnappen die Leiterplatte 21 mit Spiel zunächst leicht über die Unterseite des Gehäuses 11 hinaussteht, nach dem Ankleben der Anschlussdose 10 an das Paneel dann aber bündig an die Unterseite des Gehäuses 11 anschliesst (Fig. 7). Die vor dem Einsetzen der Leiterplatte 21 in das Gehäuse eingezogenen Leiterbänder 34 mit den Klemmen 26 werden dann nach vorne gezogen und die Klemmen 20 an die Steckanschlüsse 16, 17 angeschlossen.

Die so vorbereitete Anschlussdose 10 kann dann auf die Rückseite des Solarpaneels 28 geklebt werden (Pfeilrichtung in Fig. 7). Zuvor muss der aus dem Solarpaneel 28 rückseitig herausgeführte Flachbandanschluss 30 durch die Öffnung 18 in die Anschlussdose 10 eingeführt werden und kann später (bei geöffnetem Deckel 12) mit den Anschlussfahnen 25 verbunden werden. Die Befestigung der Anschlussdose 10 auf der Rückseite des Solarpaneels erfolgt gemäss Fig. 5 durch Klebungen 27. Dabei wird das Gehäuse 11 der Anschlussdose 10 mit einer umlaufenden Klebung dichtend auf das Solarpaneel 28 geklebt.

Die durch die Dioden 22 erzeugte, anfallende Wärme wird so auf die Fläche der Leiterplatte 21 durch die Aluminium-Trägerplatte 21 c verteilt und dann direkt auf das Solarpaneel 28 abgeführt. Das Solarpaneel 28 dient dann gleichzeitig als grossflächiger Kühlkörper. Zusammenfassend kann für diese Ausgestaltung der Erfindung folgendes festgehalten werden:
- Die durch die Dioden erzeugte Wärme der Photovoltaikanlage wird so abgeführt, dass die maximal zulässige Temperatur in der Anschlussdose nie überschritten wird.
- Die Wärmeableitung wird durch das grossflächige Solarpaneel begünstigt. Um den Übergang der Wärme von der Leiterplatte zum Paneel zu optimieren wird die Leiterplatte direkt auf die Paneelrückseite aufliegend angebaut.
- Um eine gute Verteilung der Wärme in der Printplatte zu gewährleisten, wird diese aus dem Grundmaterial Aluminium hergestellt.
- Um die anfallende Wärme von den Dioden optimal auf die Leiterplatte abzugeben, werden diese auf die grossflächige Kupferfläche der Leiterplatte gelötet. Die Leiterplatteneinheit, bestückt mit Dioden, Flachanschlüssen und Kabelanschlüssen wird als Boden in das Gehäuse eingeknipst.

- Das Gehäuse wird mit einem Deckel verschlossen. Die Dose ist staub- und wasserdicht im montierten, geschlossenen Zustand.

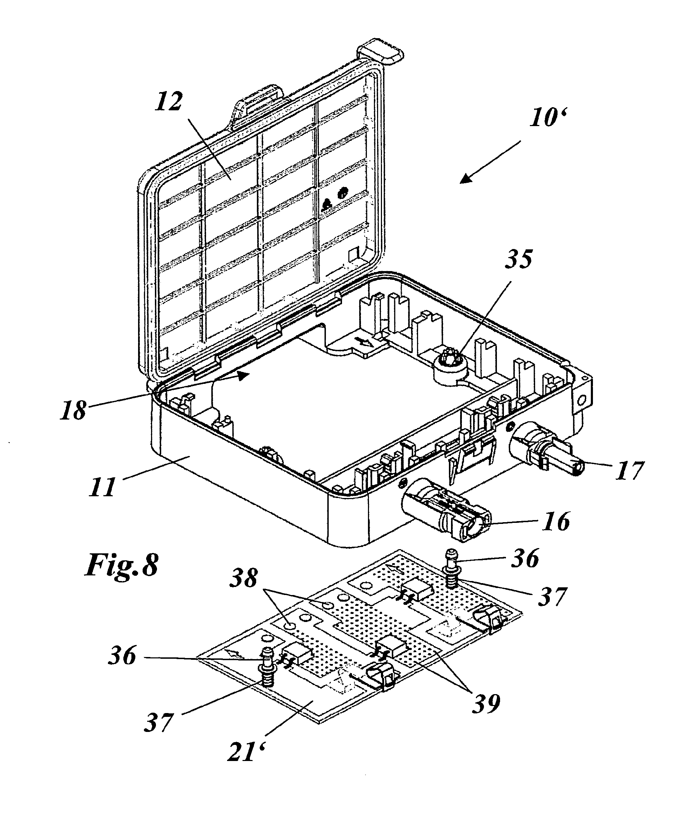

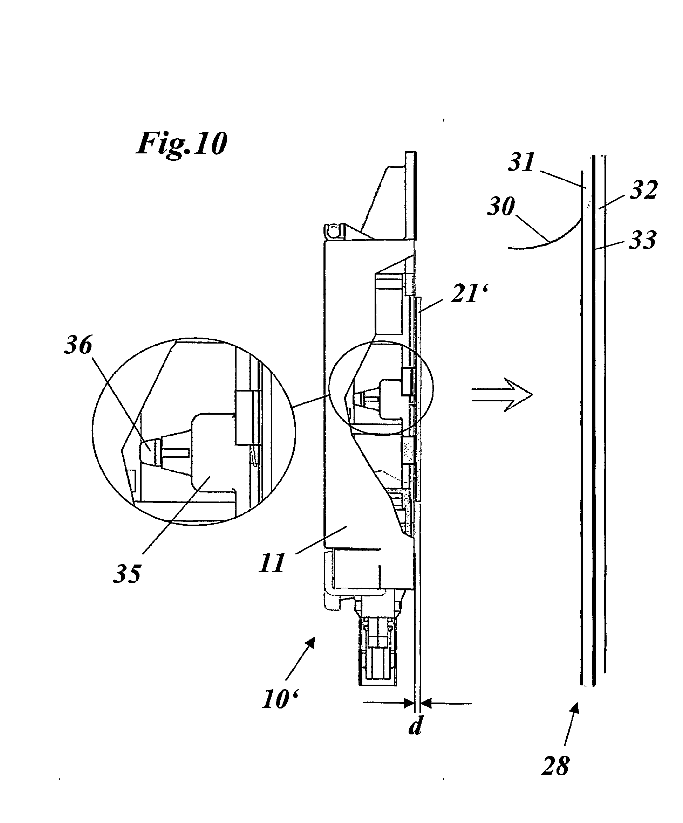

Ein anderes bevorzugtes Ausführungsbeispiel der Anschlussdose nach der Erfindung, das sich vor allem im Bezug auf die Ausgestaltung, Befestigung und thermische Auslegung der Leiterplatte vom Beispiel der Fig. 1-7 unterscheidet, ist in den Fig. 8-10 wiedergegeben. Die Anschlussdose 10' der Fig. 8-10 ist hinsichtlich des Gehäuses 11 und Deckels 12 weitgehend gleich aufgebaut, wie die weiter oben erläuterte Anschlussdose 10. Die Leiterplatte 21' wird jedoch mittels einer abweichenden Schnappverbindung 35, 36, 37 am Gehäuse 11 lösbar befestigt. Die geänderte Schnappverbindung, die wiederum erste Schnappelemente 35 am Gehäuse 11 und dazu passende zweite Schnappelemente 36 an der Leiterplatte 21' aufweist, zeichnet sich durch den Einsatz von zusätzlichen Druckfedern 37 an den zweiten Schnappelementen 36 aus. Die Druckfedern 37 drücken bei eingeschnappter Leiterplatte 21' die Leiterplatte 21' um einen vorgegebenen Abstand d über den Gehäuseboden hinaus (Fig. 10), so dass die Leiterplatte 21' bei nicht montierter Anschlussdose 10' über den Gehäuseboden flächig hinaussteht. Wird die Anschlussdose 10' dann - wie in Fig. 10 durch den Pfeil angedeutet- an dem Solarpaneel 28 montiert, wird die Leiterplatte 21' gegen den Druck der Druckfedern 37 soweit in den Gehäuseboden hineingedrückt, dass sie bündig mit ihm abschliesst. Der Federdruck sorgt dann dafür, dass die Leiterplatte 21' über ihre gesamte Fläche dauerhaft und mit gutem thermischen Kontakt an die Montagefläche des Solarpaneels 28 angedrückt wird.

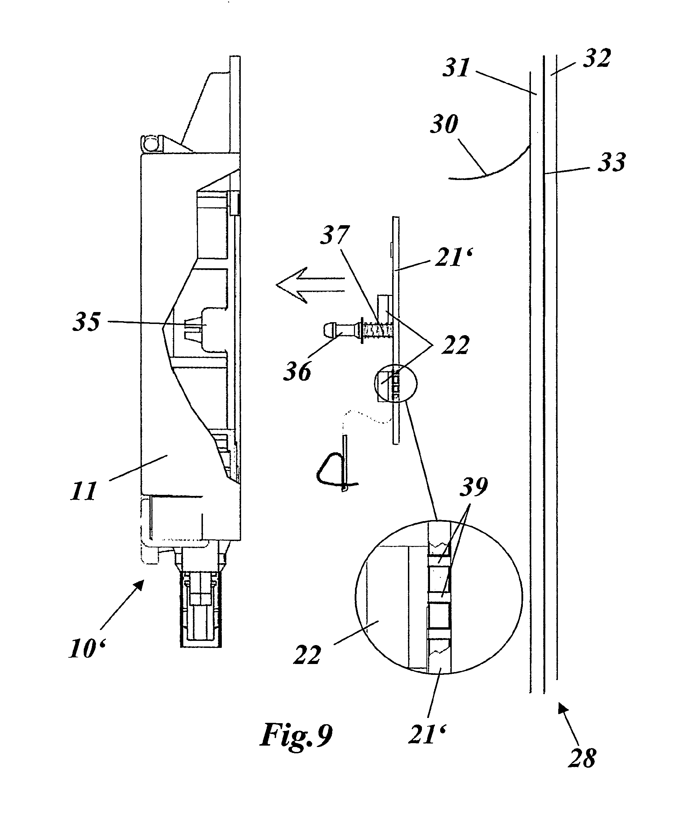

Grundsätzlich kann diese Andrucklösung auch mit einer Leiterplatte verwirklicht werden, die den in Fig. 4 gezeigten speziellen Aufbau hat. Es lässt sich jedoch eine Vereinfachung und Kostenreduzierung erzielen, wenn für die Leiterplatte 21' ein bewährtes Printplattenmaterial wie z.B. FR4 verwendet wird, welches aus einem beidseitig metallisch, insbesondere mit Cu/Sn beschichteten Isoliermaterial (glasfaserverstärktes Epoxidharz oder dgl.) besteht. Da die Kernschicht aus Isoliermaterial eine verringerte thermische Leitfähigkeit hat, sollten bei Verwendung eines solchen Printplattenmaterials Vorkehrungen getroffen werden, um die Wärmeleitung senkrecht zur Plattenebene durch die Platte hindurch zu verbessern. Hierzu wird die Leiterplatte 21' mit einer Vielzahl von über die Fläche verteilt angeordneten und aus der Printplattentechnik bekannten Durchkontaktierungslöchern (vias) 39 (Bohrungen mit metallischer Auskleidung der Bohrungswand) versehen, welche die Wärmeleitung zwischen den metallischen Beschichtungen auf Ober- und Unterseite der Leiterplatte 21' erhöhen (Fig. 9).

Eine weitere Vereinfachung und Verbilligung ergibt sich bei der Leiterplatte 21' dadurch, dass die Anschlussfahnen 25 (Fig. 3) durch flache Lötpunkte 38 aus Zinn ersetzt werden (Fig. 8), an welche die elektrischen Verbindungsleitungen nach aussen direkt angelötet werden können.

Insgesamt ergeben sich für die Ausgestaltung der Fig. 8-10 damit die folgenden Charakteristika und Vorteile:
- Schnappsystem neu mit Druckfedern, die garantieren, dass die Leiterplatte (Printplatte) immer an das Photovoltaik-Paneel gedruckt wird.
- Die Leiterplatte (Printplatte) ist neu aus FR4 (stand. Printplattenmaterial) mit beidseitiger Cu/Sn Beschichtung.
- Zur Wärmeübertragung von der Vorderseite auf die Rückseite sind auf der Leiterplatte Durchkontaktierungslöcher (sog. "vias") vorgesehen.
- Die Anschlussfahnen (25) sind durch Zinnlötpunkte ersetzt (billiger und lötfreundlicher; direkte Verbindung).

### BEZUGSZEICHENLISTE

- 10,10': Anschlussdose

- 11: Gehäuse (z.B. Kunststoff)
- 12: Deckel
- 13: Scharnier
- 14: Verschlussbügel (Schnappverschluss)
- 15: Rastzunge (Schnappverschluss)
- 16,17: Steckanschluss
- 18: Öffnung
- 21,21': Leiterplatte (Gehäuseboden)
- 21 a: Leitungsschicht (Cu)
- 21 b: Isolierschicht (Glasfaser/Polyester)
- 21 c: Trägerplatte (Aluminium)
- 22: Diode
- 23,24: Schnappelement (Schnappverbindung)
- 25: Anschlussfahne
- 26: Klemme
- 27: Klebung
- 28: Solarpaneel (photovoltaisch)
- 29: Ausnehmung
- 30: Flachbandanschluss
- 31: rückseitige Abdeckschicht
- 32: vordere Abdeckschicht
- 33: Solarzelle
- 34: Leiterband (Cu)
- 35,36: Schnappelement (Schnappverbindung)
- 37: Druckfeder
- 38: Lötpunkt
- 39: Durchkontaktierungsloch
- d: Abstand

## Patentansprüche

1. Anschlussdose (10, 10') für ein photovoltaisches Solarpaneel (28), welche Anschlussdose (10, 10') ein Gehäuse (11) umfasst, in dem erste Anschlussmittel (25, 38) zum elektrischen Anschliessen des Solarpaneels (28), zweite Anschlussmittel (26, 34) zum Herstellen der elektrischen Verbindung mit anderen Solarpaneelen, sowie Dioden (22) angeordnet sind, welche Dioden (22) mit den ersten und zweiten Anschlussmitteln (25 bzw. 26, 34) elektrisch verbunden und auf einer Leiterplatte (21, 21') angeordnet sind, wobei die Leiterplatte (21, 21') einen Teil einer Aussenwand des Gehäuses (11) bildet, **dadurch gekennzeichnet, dass** die Leiterplatte (21) eine thermisch gut leitende metallische Trägerplatte (21c) umfasst, welche beim Einsetzen der Leiterplatte (21) in das Gehäuse (11) die Aussenseite des Gehäusebodens bildet.

2. Anschlussdose nach Anspruch 1, **dadurch gekennzeichnet, dass** das Gehäuse (11) auf der Oberseite durch einen Deckel (12) verschliessbar ist, dass das Gehäuse (11) auf der dem Deckel (12) gegenüberliegenden Seite einen Gehäuseboden aufweist, und dass die Leiterplatte (21, 21') einen Teil des Gehäusebodens bildet.

3. Anschlussdose nach Anspruch 2, **dadurch gekennzeichnet, dass** die Leiterplatte (21, 21') lösbar mit dem Gehäuse (11) verbunden ist.

4. Anschlussdose nach Anspruch 3, **dadurch gekennzeichnet, dass** die Leiterplatte (21, 21') mittels einer Schnappverbindung (23, 24; 35, 36) am Gehäuse befestigt ist.

5. Anschlussdose nach Anspruch 4, **dadurch gekennzeichnet, dass** die Schnappverbindung (35, 36) Druckfedern umfasst, derart, dass die eingeschnappte Leiterplatte (21, 21') über den Gehäuseboden ganzflächig hinaussteht und gegen den Federdruck der Druckfedern (35, 36) soweit in das Gehäuse (11) eindrückbar ist, dass sie mit dem Gehäuseboden im wesentlichen bündig abschliesst.

6. Anschlussdose nach einem der Ansprüche 1 bis 5, **dadurch gekennzeichnet, dass** die ersten und zweiten Anschlussmittel (25, 26, 34, 38) zusammen mit den Dioden (22) auf der Leiterplatte (21, 21') angeordnet sind, und dass die Dioden (22) thermisch eng an die Leiterplatte (21, 21') angekoppelt sind.

7. Anschlussdose nach einem der Ansprüche 1 bis 6, **dadurch gekennzeichnet, dass** die metallische Trägerplatte (21c) aus Aluminium ist.

8. Anschlussdose nach Anspruch 7, **dadurch gekennzeichnet, dass** die Leiterplatte (21) einen Schichtaufbau aus der Trägerplatte (21c), einer darüber liegenden Isolierschicht (21 b) und einer über der Isolierschicht (21 b) liegenden Leitungsschicht (21 a) aufweist.

9. Anschlussdose nach Anspruch 8, **dadurch gekennzeichnet, dass** die Trägerplatte (21 c) eine Dicke von etwa 1,5 mm aufweist, dass die Isolierschicht (21 b) aus Glasfasern enthaltendem Polyester besteht und eine Dicke von etwa 150 µm aufweist, und dass die Leitungsschicht (21 a) aus Cu besteht und eine Dicke von etwa 35 µm aufweist.

10. Anschlussdose nach einem der Ansprüche 1 bis 6, **dadurch gekennzeichnet, dass** die Leiterplatte (21') aus beidseitig metallisch, insbesondere mit Cu/Sn beschichtetem Isoliermaterial besteht, und dass Mittel (39) zur verstärkten thermischen Kopplung der beiden metallischen Beschichtungen vorgesehen sind.

11. Anschlussdose nach Anspruch 10, **dadurch gekennzeichnet, dass** die thermischen Kopplungsmittel eine Vielzahl von über die Leiterplatte (21') verteilt angeordneten Durchkontaktierungslöchern (39) umfasst.

12. Anschlussdose nach einem der Ansprüche 8 bis 11, **dadurch gekennzeichnet, dass** die Dioden (22) und die ersten und zweiten Anschlussmittel (25, 26, 34, 38) über in der Leitungsschicht (21 a) bzw. in den metallischen Beschichtungen ausgebildete Leiterbahnen miteinander elektrisch verbunden sind.

13. Anschlussdose nach Anspruch 6, **dadurch gekennzeichnet, dass** die ersten Anschlussmittel als auf der Leiterplatte (21) befestigte, von der Leiterplatte (21) abstehende Anschlussfahnen (25) ausgebildet sind, und dass in der Nähe der Anschlussfahnen (25) im Gehäuse (11) eine Öffnung (18) zur Durchführung von Anschlussleitungen (30) des Solarpaneels (28) vorgesehen ist.

14. Anschlussdose nach Anspruch 6, **dadurch gekennzeichnet, dass** die ersten Anschlussmittel als auf der Leiterplatte (21') angeordnete Lötpunkte (38) ausgebildet sind, und dass in der Nähe der Lötpunkte (38) im Gehäuse (11) eine Öffnung (18) zur Durchführung von Anschlussleitungen (30) des Solarpaneels (28) vorgesehen ist.

15. Anschlussdose nach einem der Ansprüche 1 bis 14, **dadurch gekennzeichnet, dass** am Gehäuse (11) von innen zugängliche Anschlüsse (16, 17) zum Verbinden der Anschlussdose (10) mit anderen Solarpaneelen angeordnet sind, und dass die zweiten Anschlussmittel (26, 34) zur Herstellung einer elektrischen Verbindung mit den Anschlüssen (16, 17) ausgebildet sind.

16. Anschlussdose nach Anspruch 15, **dadurch gekennzeichnet, dass** die zweiten Anschlussmittel jeweils ein flexibles Leiterband (34) umfassen, welches mit dem einen Ende an der Leiterplatte (21, 21') befestigt ist, und am anderen Ende eine Klemme (26) zur lösbaren Verbindung mit einem der Anschlüsse (16, 17) aufweist.

17. Anschlussdose nach Anspruch 15 oder 16, **dadurch gekennzeichnet, dass** die Anschlüsse als Steckanschlüsse (16, 17) ausgebildet sind.

18. Solarpaneel (28) mit einer Anschlussdose (10) nach einem der Ansprüche 1 bis 17, **dadurch gekennzeichnet, dass** die Anschlussdose (10) an dem Solarpaneel (28) derart befestigt ist, dass die Leiterplatte (21, 21') in flächigem thermischen Kontakt mit dem Solarpaneel (28) steht.

19. Solarpaneel nach Anspruch 18, **dadurch gekennzeichnet, dass** die Anschlussdose (10) mit der Leiterplatte (21) auf das Solarpaneel (28) geklebt ist.

20. Solarpaneel nach Anspruch 18, **dadurch gekennzeichnet, dass** die Leiterplatte (21') mechanisch, insbesondere mit Federdruck, gegen das Solarpaneel (28) gepresst wird.

21. Solarpaneel nach einem der Ansprüche 18 bis 20, **dadurch gekennzeichnet, dass** das Solarpaneel (28) Solarzellen (33) umfasst, die zwischen einer vorderen Abdeckschicht (32) und einer rückseitigen Abdeckschicht (31) angeordnet sind, und dass die Anschlussdose (10) mit der Leiterplatte (21, 21') auf der rückseitigen Abdeckschicht (31) befestigt bzw. auf die rückseitige Abdeckschicht (31) geklebt ist.

22. Solarpaneel nach Anspruch 21, **dadurch gekennzeichnet, dass** die vordere Abdeckschicht (32) aus Glas besteht, und dass die rückseitige Abdeckschicht (31) aus Glas oder einer Polyvinylfluoridfolie besteht.

## Claims

1. Connection box (10, 10') for a photovoltaic solar panel (28), which connection box (10, 10') comprises a housing (11) in which first connection means (25, 38) for electrically connecting the solar panel (28), second connection means (26, 34) for establishing the electrical connection with other solar panels, and diodes (22) are arranged, which diodes (22) are electrically connected to the first and second connection means (25 and, respectively, 26, 34) and are arranged on a printed circuit board (21, 21'), with the printed circuit board (21, 21') forming a portion of an outer wall of the housing (11), **characterized in that** the printed circuit board (21) comprises a highly thermally conductive metal support plate (21c) which forms the outer face of the housing base when the printed circuit board (21) is inserted into the housing (11).

2. Connection box according to Claim 1, **characterized in that** the housing (11) can be closed at the upper face by a cover (12), **in that** the housing (11) has, on the face opposite the cover (12), a housing base, and **in that** the printed circuit board (21, 21') forms a portion of the housing base.

3. Connection box according to Claim 2, **characterized in that** the printed circuit board (21, 21') is detachably connected to the housing (11).

4. Connection box according to Claim 3, **characterized in that** the printed circuit board (21, 21') is attached to the housing by means of a snap-action connection (23, 24; 35, 36).

5. Connection box according to Claim 4, **characterized in that** the snap-action connection (35, 36) comprises compression springs, in such a way that the snapped-in printed circuit board (21, 21') projects beyond the housing base over the entire area and can be pressed into the housing (11), against the spring pressure of the compression springs (35, 36), to such an extent that said printed circuit board terminates substantially flush with the housing base.

6. Connection box according to one of Claims 1 to 5, **characterized in that** the first and second connection means (25, 26, 34, 38), together with the diodes (22), are arranged on the printed circuit board (21, 21'), and **in that** the diodes (22) are thermally closely coupled to the printed circuit board (21, 21').

7. Connection box according to one of Claims 1 to 6, **characterized in that** the metal support plate (21c) is composed of aluminium.

8. Connection box according to Claim 7, **characterized in that** the printed circuit board (21) has a layer structure comprising the carrier plate (21c), an insulating layer (21b) which is situated above the said carrier plate, and a conduction layer (21a) which is situated above the insulating layer (21b).

9. Connection box according to Claim 8, **characterized in that** the support plate (21c) has a thickness of approximately 1.5 mm, **in that** the insulating layer (21b) consists of polyester containing glass fibres and has a thickness of approximately 150 µm, and **in that** the conduction layer (21a) consists of copper and has a thickness of approximately 35 µm.

10. Connection box according to one of Claims 1 to 6, **characterized in that** the printed circuit board (21') consists of insulating material which is coated on both sides with metal, in particular with copper/tin, and **in that** means (39) for intensified thermal coupling of the two metal coatings are provided.

11. Connection box according to Claim 10, **characterized in that** the thermal coupling means comprises a large number of plated-through holes (39) which are distributed over the printed circuit board (21').

12. Connection box according to one of Claims 8 to 11, **characterized in that** the diodes (22) and the first and second connection means (25, 26, 34, 38) are electrically connected to one another by means of conductor tracks which are formed in the conduction layer (21a) and/or in the metal coatings.

13. Connection box according to Claim 6, **characterized in that** the first connection means are in the form of connection lugs (25) which are mounted on the printed circuit board (21) and project from the printed circuit board (21), and **in that** an opening (18) for connection lines (30) of the solar panel (28) to pass through is provided in the housing (11) in the vicinity of the connection lugs (25).

14. Connection box according to Claim 6, **characterized in that** the first connection means are in the form of solder points (38) which are arranged on the printed circuit board (21'), and **in that** an opening (18) for connection lines (30) of the solar panel (28) to pass through is provided in the housing (11) in the vicinity of the solder points (38).

15. Connection box according to one of Claims 1 to 14, **characterized in that** connections (16, 17), which are accessible from the inside, for connecting the connection box (10) to other solar panels are arranged on the housing (11), and **in that** the second connection means (26, 34) are designed for establishing an electrical connection with the connections (16, 17).

16. Connection box according to Claim 15, **characterized in that** the second connection means each comprise a flexible conductor strip (34) which is attached to the printed circuit board (21, 21') by way of one end and has a terminal (26) for detachable connection to one of the connections (16, 17) at the other end.

17. Connection box according to Claim 15 or 16, **characterized in that** the connections are in the form of plug-type connections (16, 17).

18. Solar panel (28) having a connection box (10) according to one of Claims 1 to 17, **characterized in that** the connection box (10) is attached to the solar panel (28) in such a way that the printed circuit board (21, 21') is in surface-to-surface thermal contact with the solar panel (28).

19. Solar panel according to Claim 18, **characterized in that** the connection box (10) comprising the printed circuit board (21) is adhesively bonded on the solar panel (28).

20. Solar panel according to Claim 18, **characterized in that** the printed circuit board (21') is pressed mechanically, in particular with spring pressure, against the solar panel (28).

21. Solar panel according to one of Claims 18 to 20, **characterized in that** the solar panel (28) comprises solar cells (33) which are arranged between a front covering layer (32) and a rear covering layer (31), and **in that** the connection box (10) comprising the printed circuit board (21, 21') is mounted on the rear covering layer (31) and adhesively bonded on the rear covering layer (31).

22. Solar panel according to Claim 21, **characterized in that** the front covering layer (32) consists of glass, and **in that** the rear covering layer (31) consists of glass or a polyvinyl fluoride film.

## Revendications

1. Prise de raccordement (10, 10') pour un panneau solaire photovoltaïque (28), laquelle prise de raccordement (10, 10') comprend un boîtier (11) dans lequel sont disposés des premiers moyens de raccordement (25, 38) pour le raccordement électrique du panneau solaire (28), des deuxièmes moyens de raccordement (26, 34) pour l'établissement de la connexion électrique avec d'autres panneaux solaires, ainsi que des diodes (22), lesquelles diodes (22) sont électriquement reliées aux premiers et deuxièmes moyens de raccordement (25 ou 26, 34) et disposées sur une carte de circuit imprimé (21, 21'), la carte de circuit imprimé (21, 21') formant une partie d'une paroi extérieure du boîtier (11), **caractérisée en ce que** la carte de circuit imprimé (21) comprend une plaque de support métallique (21c) à bonne conductivité thermique, laquelle forme le côté extérieur du fond de boîtier lors de la mise en place de la carte de circuit imprimé (21) dans le boîtier (11).

2. Prise de raccordement selon la revendication 1, **caractérisée en ce que** le boîtier (11) peut être fermé sur le dessus par un couvercle (12), **en ce que** le boîtier (11) présente un fond de boîtier du côté opposé au couvercle (12), et **en ce que** la carte de circuit imprimé (21, 21') forme une partie du fond de boîtier.

3. Prise de raccordement selon la revendication 2, **caractérisée en ce que** la carte de circuit imprimé (21, 21') est reliée de façon amovible au boîtier (11).

4. Prise de raccordement selon la revendication 3, **caractérisée en ce que** la carte de circuit imprimé (21, 21') est fixée sur le boîtier au moyen d'un assemblage à encliquetage (23, 24 ; 35, 36).

5. Prise de raccordement selon la revendication 4, **caractérisée en ce que** l'assemblage à encliquetage (35, 36) comprend des ressorts de pression, de telle sorte que la carte de circuit imprimé (21, 21') encliquetée dépasse de toute sa surface par-dessus le fond de boîtier et peut être enfoncée dans le boîtier (11), contre la pression de ressort des ressorts de pression (35, 36), jusqu'à se terminer essentiellement en affleurement avec le fond de boîtier.

6. Prise de raccordement selon l'une des revendications 1 à 5, **caractérisée en ce que** les premiers et deuxièmes moyens de raccordement (25, 26, 34, 38) sont disposés sur la carte de circuit imprimé (21, 21'), ensemble avec les diodes (22), et **en ce que** les diodes (22) sont thermiquement accouplées étroitement à la carte de circuit imprimé (21, 21').

7. Prise de raccordement selon l'une des revendications 1 à 6, **caractérisée en ce que** la plaque de support métallique (21c) est en aluminium.

8. Prise de raccordement selon la revendication 7, **caractérisée en ce que** la carte de circuit imprimé (21) présente une structure stratifiée, constituée de la plaque de support (21c), d'une couche isolante (21b) située au-dessus de celle-ci, et d'une couche conductrice (21a) située au-dessus de la couche isolante (21b).

9. Prise de raccordement selon la revendication 8, **caractérisée en ce que** la plaque de support (21c) présente une épaisseur d'environ 1,5 mm, **en ce que** la couche isolante (21b) est constituée d'un polyester comprenant des fibres de verre et présente une épaisseur d'environ 150 µm, et **en ce que** la couche conductrice (21a) est constituée de Cu et présente une épaisseur d'environ 35 µm.

10. Prise de raccordement selon l'une des revendications 1 à 6, **caractérisée en ce que** la carte de circuit imprimé (21') est constituée d'un matériau isolant à revêtement métallique des deux côtés, en particulier un revêtement de Cu/Sn, et **en ce que** des moyens (39) sont prévus pour l'accouplement thermique renforcé des deux revêtements métalliques.

11. Prise de raccordement selon la revendication 10, **caractérisée en ce que** les moyens d'accouplement thermique comprennent une multitude d'orifices de connexion débouchants (39) répartis sur la carte de circuit imprimé (21').

12. Prise de raccordement selon l'une des revendications 8 à 11, **caractérisée en ce que** les diodes (22) et les premiers et deuxièmes moyens de raccordement (25, 26, 34, 38) sont électriquement reliés entre eux par des pistes conductrices formées dans la couche conductrice (21a) ou dans les revêtements métalliques.

13. Prise de raccordement selon la revendication 6, **caractérisée en ce que** les premiers moyens de raccordement sont conçus comme des talons de raccordement (25) fixés sur la carte de circuit imprimé (21) et faisant saillie sur la carte de circuit imprimé (21), et **en ce qu'**une ouverture (18) destinée au passage de lignes de raccordement (30) du panneau solaire (28) est prévue dans le boîtier (11), à proximité des talons de raccordement (25).

14. Prise de raccordement selon la revendication 6, **caractérisée en ce que** les premiers moyens de raccordement sont conçus comme des points de soudure (38) disposés sur la carte de circuit imprimé (21'), et **en ce qu'**une ouverture (18) destinée au passage de lignes de raccordement (30) du panneau solaire (28) est prévue dans le boîtier (11), à proximité des points de soudure (38).

15. Prise de raccordement selon l'une des revendications 1 à 14, **caractérisée en ce que** des raccords (16, 17), accessibles depuis l'intérieur et destinés à la connexion de la prise de raccordement (10) à d'autres panneaux solaires, sont disposés sur le boîtier (11), et **en ce que** les deuxièmes moyens de raccordement (26, 34) sont conçus pour l'établissement d'une connexion électrique avec les raccords (16, 17).

16. Prise de raccordement selon la revendication 15, **caractérisée en ce que** les deuxièmes moyens de raccordement comprennent à chaque fois une bande conductrice souple (34), qui est fixée à la carte de circuit imprimé (21, 21') par une extrémité, et présente une borne (26) à l'autre extrémité, pour la connexion amovible à l'un des raccords (16, 17).

17. Prise de raccordement selon la revendication 15 ou 16, **caractérisée en ce que** les raccords sont conçus comme des raccords à fiches (16, 17).

18. Panneau solaire (28) avec une prise de raccordement (10) selon l'une des revendications 1 à 17, **caractérisé en ce que** la prise de raccordement (10) est fixée de telle manière au panneau solaire (28), que la carte de circuit imprimé (21, 21') se trouve en contact thermique surfacique avec le panneau solaire (28).

19. Panneau solaire selon la revendication 18, **caractérisé en ce que** la prise de raccordement (10) est collée avec la carte de circuit imprimé (21) sur le panneau solaire (28).

20. Panneau solaire selon la revendication 18, **caractérisé en ce que** la carte de circuit imprimé (21') est serrée mécaniquement contre le panneau solaire (28), en particulier par pression de ressort.

21. Panneau solaire selon l'une des revendications 18 à 20, **caractérisé en ce que** le panneau solaire (28) comprend des cellules solaires (33) disposées entre une couche de revêtement avant (32) et une couche de revêtement arrière (31), et **en ce que** la prise de raccordement (10) est fixée avec la carte de circuit imprimé (21, 21') sur la couche de revêtement arrière (31) ou collée sur la couche de revêtement arrière (31).

22. Panneau solaire selon la revendication 21, **caractérisé en ce que** la couche de revêtement avant (32) est constituée de verre, et **en ce que** la couche de revêtement arrière (31) est constituée de verre ou d'un film de fluorure de polyvinyle.
